# EUROPEAN PATENT APPLICATION

(11) **EP 4 760 542 A1**
(43) Date of publication of application: **17.06.2026**
(21) Application number: 24855817.3
(22) Date of filing: 20.08.2024
(51) Int. Cl.: G06F 16/9538, G06F 16/9535, G06F 3/04815, G06T 19/00

(54) **THREE DIMENSIONAL SPACE SEARCH CONTENT DISPLAY METHOD, AR DEVICE, AND COMPUTER-READABLE MEDIUM**

(30) Priority: 24.08.2023 CN 202311080591
(71) Applicant: Hangzhou Lingban Technology Co., Ltd., Hangzhou, Zhejiang 310000 (CN)
(72) Inventor: WANG, Liyuan, Hangzhou, Zhejiang 310000 (CN); ZHANG, Tao, Hangzhou, Zhejiang 310000 (CN); ZHANG, Mo, Hangzhou, Zhejiang 310000 (CN); XIE, Haiyang, Hangzhou, Zhejiang 310000 (CN); WANG, Junjie, Hangzhou, Zhejiang 310000 (CN)
(74) Representative: Huang, Liwei
(86) International application number: PCT/CN2024/113459
(87) International publication number: WO 2025/040095

(57) **Abstract**

Embodiments of the present disclosure disclose a search content display method for three-dimensional space, an AR device, and a computer-readable medium. A specific implementation of the method includes: obtaining a search content sequence; generating each piece of display position information of each piece of search content based on a sequence ranking of each piece of search content in the search content sequence; displaying each search content card corresponding to each piece of search content in three-dimensional space, where the search content card is displayed based on a ranking in the search content sequence at a three-dimensional display layer that corresponds to a depth coordinate corresponding to the search content, and each piece of search content corresponding to each search content card that corresponds to a field of view area is arranged at a front end of the search content sequence; and displaying each updated search content card at each three-dimensional display layer in response to detecting a slide to refresh operation for each three-dimensional display layer in the three-dimensional space. This implementation improves adaptability of displayed search content to the AR device, and improves a sense of three-dimensionality and a sense of space of a wearing user during watching.

## Description

### CROSS-REFERENCES TO RELATED APPLICATIONS

This application claims priority to Chinese Patent Application No. 202311080591.3, filed with the China National Intellectual Property Administration on August 24, 2023, which is incorporated herein by reference in its entirety.

### TECHNICAL FIELD

Embodiments of the present disclosure relate to the field of extended reality technologies, and in particular, to a search content display method for three-dimensional space, an AR device, and a computer-readable medium.

### BACKGROUND

An AR device is applied more widely as an augmented reality (Augmented Reality, AR) technology gradually develops. Search content is information obtained based on filtering information and a filtering condition. Currently, the AR device displays the search content usually in a tiled display manner on a two-dimensional page in three-dimensional space.

However, the inventor finds that, when the search content is displayed in the foregoing manner, the following technical problems often occur: The tiled display manner is the same as a display manner in a two-dimensional application, which results in poor adaptability of the displayed search content to the AR device, and a poor sense of three-dimensionality and a poor sense of space of a wearing user during watching.

The foregoing information disclosed in this background section is only for enhancing understanding of the background of the concept of the present disclosure, and therefore, the information may contain information that does not form the prior art that is known to a person of ordinary skill in the art in China.

### SUMMARY

The summary section of the present disclosure is intended to introduce concepts in a brief form, and the concepts are described in detail in the subsequent description of embodiments section. The summary section of the present disclosure is neither intended to identify key features or necessary features of the claimed technical solutions, nor intended to limit the scope of the claimed technical solutions.

Some embodiments of the present disclosure provide a search content display method for three-dimensional space, an AR device, and a computer-readable medium, to resolve one or more of the foregoing technical problems mentioned in the background section.

According to a first aspect, some embodiments of the present disclosure provide a search content display method for three-dimensional space. The method includes: obtaining a search content sequence based on input information in a search box displayed in corresponding three-dimensional space or preference information of a current user, where the search content sequence includes N pieces of search content, and each piece of search content is ranked based on information popularity; generating each piece of display position information of each piece of search content based on a sequence ranking n (1≤n≤N, and n is an integer) of each piece of search content in the search content sequence, where display position information in each piece of display position information includes a horizontal coordinate X, a vertical coordinate Y, and a depth coordinate Z, the horizontal coordinate X represents a horizontal ranking relative to a camera position, the vertical coordinate Y represents a vertical ranking relative to a horizontal coordinate line X, and the depth coordinate Z represents a depth ranking relative to the camera position; displaying each search content card corresponding to each piece of search content in the three-dimensional space based on the horizontal coordinate X, the vertical coordinate Y, and the depth coordinate Z that correspond to each piece of search content, where the search content card displays first-page content information of the corresponding search content, the search content card is displayed based on a ranking in the search content sequence at a three-dimensional display layer that corresponds to the depth coordinate corresponding to the search content, each piece of search content corresponding to each search content card that corresponds to a field of view area is arranged at a front end of the search content sequence at each three-dimensional display layer in the three-dimensional space, display brightness of a three-dimensional display layer relatively far away from the camera position is less than display brightness of a three-dimensional display layer relatively close to the camera position, and all search content cards have a same horizontal width; and displaying each updated search content card at each three-dimensional display layer in response to detecting a slide to refresh operation for each three-dimensional display layer in the three-dimensional space. The three-dimensional space is displayed in an AR device whose FOV range is 40 degrees to 60 degrees, a value range of N is 11 to 55, a value range of the horizontal coordinate X is -5 to 5, and a value range of the depth coordinate Z is 1 to 4.

Optionally, a value range of Z is 1 to 3; and Z=3 when n is divisible by 3; or Z=2 when n is indivisible by 3 but is divisible by 2; or Z=1 when n is indivisible by 3 or 2.

Optionally, the method further includes: in response to detecting a slide to back operation for each three-dimensional display layer in the three-dimensional space, and each updated search content card being currently displayed at each three-dimensional display layer, displaying, at each three-dimensional display layer, each search content card displayed at the three-dimensional display layer at a previous time.

Optionally, the method further includes: moving a target search content card to a target layer in response to detecting a hover operation performed on a search content card displayed at any three-dimensional display layer, where the target search content card is a search content card corresponding to the hover operation, a distance between the target layer and the camera position is less than a distance between each three-dimensional display layer and the camera position, and a card size of the target search content card displayed at the target layer is larger than a card size of the target search content card displayed at the any three-dimensional display layer.

Optionally, the moving a target search content card to a target layer includes: determining the card size of the target search content card at the any three-dimensional display layer; determining a scale-up multiple of the target search content card based on the determined card size; generating the card size of the target search content card at the target layer as a target card size based on the scale-up multiple and the determined card size; and moving the target search content card to the target layer, and scaling up the target search content card to the target card size.

Optionally, the moving a target search content card to a target layer includes: moving the target search content card to the target layer in response to determining that the any three-dimensional display layer is not a three-dimensional display layer closest to the camera position; and for each three-dimensional display layer before the any three-dimensional display layer, moving each search content card adjacent to the target search content card at the three-dimensional display layer to either side in response to determining that the target search content card is moved to the three-dimensional display layer, and resetting each moved search content card at the three-dimensional display layer in response to determining that the target search content card is moved out of the three-dimensional display layer.

Optionally, the method further includes: in response to detecting a selection operation performed on the target search content card at the target layer, scaling up and displaying the target search content card at a central position of the target layer, and hiding each search content card displayed at each three-dimensional display layer, where a refresh control and a return control are further displayed at the target layer; obtaining a related content sequence that corresponds to search content corresponding to the target search content card; and displaying each related content card corresponding to the related content sequence around the target search content card in the three-dimensional space.

Optionally, the scaling up and displaying the target search content card at a central position of the target layer includes: scaling up the target search content card by a target multiple corresponding to the field of view area in response to determining that a content type corresponding to the target search content card is a picture and text type or a text type; displaying the scaled-up target search content card at the central position of the target layer; and sliding and displaying display content corresponding to the content slide operation on the target search content card in response to detecting a content slide operation performed on the target search content card.

Optionally, each search content card edge part is further displayed on either side of the field of view area, and display brightness of each search content card edge part is less than display brightness of a three-dimensional display layer corresponding to the search content card edge part; and the method further includes: in response to detecting a field of view moving operation in the three-dimensional space, displaying each search content card in an updated field of view area corresponding to the field of view moving operation, and for each search content card edge part on a side corresponding to the field of view moving operation in the field of view area, updating display brightness of the search content card edge part to display brightness of a three-dimensional display layer corresponding to the search content card edge part.

Optionally, any three-dimensional display layer in the three-dimensional space corresponds to a pre-divided card display column sequence, the card display column sequence is arranged in ascending order in a counter-clockwise direction from the central position, and the number of search content cards that are displayable in each card display column is less than a preset number; and the generating each piece of display position information of each piece of search content includes: determining a card size corresponding to the search content based on a content type corresponding to each piece of search content in the search content sequence, where all determined card sizes include a same card width; determining a first card display column in the card display column sequence as a current card display column; determining a first piece of search content in the search content sequence as current search content; and performing the following loop steps based on the current card display column and the current search content: in response to determining that a remaining display size of the current card display column is larger than a card size corresponding to the current search content, and the number of pieces of to-be-displayed search content corresponding to the current card display column is less than a difference between the preset number and a preset value, determining a horizontal coordinate and a vertical coordinate that correspond to the current search content based on an initial vertical coordinate corresponding to the current card display column or a vertical coordinate corresponding to a last piece of to-be-displayed search content, using a next piece of search content of the current search content as current search content, and performing the loop step again; and in response to determining that the remaining display size of the current card display column is larger than the card size corresponding to the current search content, or the number of pieces of to-be-displayed search content corresponding to the current card display column is less than the difference between the preset number and the preset value, using a next card display column of the current card display column as a current card display column, and performing the loop step again.

Optionally, the generating each piece of display position information of each piece of search content further includes: performing the following steps for each piece of search content in the search content sequence: determining a first value as a depth coordinate corresponding to the search content in response to determining that a sequence number of the search content meets a first preset exact division condition corresponding to the first value; determining a second value as the depth coordinate corresponding to the search content in response to determining that the sequence number of the search content meets a second preset exact division condition corresponding to the second value; determining a third value as the depth coordinate corresponding to the search content in response to determining that the sequence number of the search content does not meet the first preset exact division condition or the exact second preset exact division condition, where the second value is greater than the first value, and the first value is greater than the third value; and determining a horizontal coordinate, a vertical coordinate, and the depth coordinate that correspond to the search content as display position information corresponding to the search content.

According to a second aspect, some embodiments of the present disclosure provide an AR device, including: one or more processors; a display screen, configured to perform imaging in front of an eye of a user; and a storage apparatus, where the storage apparatus stores one or more programs. When the one or more programs are executed by the one or more processors, the one or more processors are enabled to implement the method described in any implementation of the first aspect.

According to a third aspect, some embodiments of the present disclosure provide a computer-readable medium, on which a computer program is stored. The program is executed by a processor to implement the method described in any implementation of the first aspect.

The foregoing embodiments of the present disclosure have the following beneficial effects: The search content display method for three-dimensional space in some embodiments of the present disclosure improves adaptability of displayed search content to the AR device, and improves a sense of three-dimensionality and a sense of space of a wearing user during watching. Specifically, poor adaptability of the displayed search content to the AR device and a poor sense of three-dimensionality and a poor sense of space of the wearing user during watching are caused by the following: A tiled display manner is the same as a display manner in a two-dimensional application, which results in poor adaptability of the displayed search content to the AR device, and the poor sense of three-dimensionality and the poor sense of space of the wearing user during watching. Based on this, in the search content display method for three-dimensional space in some embodiments of the present disclosure, a search content sequence is obtained based on input information in a search box displayed in corresponding three-dimensional space or preference information of a current user. The search content sequence includes N pieces of search content, and each piece of search content is ranked based on information popularity; Therefore, each piece of search content arranged based on popularity may be obtained based on input information of the user or the preference information of the user. Each piece of display position information of each piece of search content is generated based on a sequence ranking n (1≤n≤N, and n is an integer) of each piece of search content in the search content sequence. Display position information in each piece of display position information includes a horizontal coordinate X, a vertical coordinate Y, and a depth coordinate Z. The horizontal coordinate X represents a horizontal ranking relative to a camera position. The vertical coordinate Y represents a vertical ranking relative to a horizontal coordinate line X. The depth coordinate Z represents a depth ranking relative to the camera position. Therefore, the display position information of each piece of search content may be determined based on a popularity ranking of each piece of search content. The display position information includes the horizontal coordinate X, the vertical coordinate Y, and the depth coordinate Z, which may represent that the display position information is three-dimensional. Each search content card corresponding to each piece of search content is displayed in the three-dimensional space based on the horizontal coordinate X, the vertical coordinate Y, and the depth coordinate Z that correspond to each piece of search content. The search content card displays first-page content information of the corresponding search content. The search content card is displayed based on a ranking in the search content sequence at a three-dimensional display layer that corresponds to the depth coordinate corresponding to the search content. Each piece of search content corresponding to each search content card that corresponds to a field of view area is arranged at a front end of the search content sequence at each three-dimensional display layer in the three-dimensional space, and display brightness of a three-dimensional display layer relatively far away from the camera position is less than display brightness of a three-dimensional display layer relatively close to the camera position. All search content cards have a same horizontal width. Therefore, all search content may be displayed at different layers in a card form in the three-dimensional space based on the three-dimensional display position information, and search content with relatively high popularity may be displayed in a card form in the field of view area. All the displayed search content cards have a same horizontal width, so that all the search content cards can be arranged regularly, to facilitate watching by a wearing user. The display brightness of the three-dimensional display layer relatively close to the camera position is relatively high, so that the wearing user watches display content at a front three-dimensional display layer. Each updated search content card is displayed at each three-dimensional display layer in response to detecting a slide to refresh operation for each three-dimensional display layer in the three-dimensional space. The three-dimensional space is displayed in an AR device whose FOV range is 40 degrees to 60 degrees. A value range of N is 11 to 55. A value range of the horizontal coordinate X is -5 to 5. A value range of the depth coordinate Z is 1 to 4. Therefore, all the search content cards displayed at all the three-dimensional display layers in the three-dimensional space may be refreshed as a whole. In addition, because all the displayed search content cards are displayed at all the three-dimensional display layers, all the three-dimensional display layers are at different distances from the camera position and have different display brightness, and a combination with a function of the AR device is enhanced, adaptability of the displayed search content to the AR device is improved. Further, because the displayed search content cards correspond to different depths and shades, a sense of three-dimensionality and a sense of space of the wearing user during watching of the search content cards are improved. Therefore, this improves the adaptability of the displayed search content to the AR device, and improves the sense of three-dimensionality and the sense of space of the wearing user during watching.

### BRIEF DESCRIPTION OF DRAWINGS

The above-mentioned and other features, advantages, and aspects of embodiments of the present disclosure become more apparent with reference to the accompanying drawings and the following description of embodiments. Throughout the accompanying drawings, the same or similar reference numerals denote the same or similar elements. It should be understood that the accompanying drawings are schematic, and components and elements are not necessarily drawn to scale.
FIG. 1 is a flowchart of some embodiments of a search content display method for three-dimensional space according to the present disclosure;
FIG. 2 is a schematic diagram of arranging search content in a search content display method for three-dimensional space according to some embodiments of the present disclosure;
FIG. 3 to FIG. 5 are schematic diagrams of an application scenario of a search content display method for three-dimensional space according to some embodiments of the present disclosure;
FIG. 6 is a flowchart of some other embodiments of a search content display method for three-dimensional space according to the present disclosure;
FIG. 7 is a schematic diagram of arranging a related content card in some other embodiments of a search content display method for three-dimensional space according to the present disclosure; and
FIG. 8 is a schematic structural diagram of an AR device applied to implement some embodiments of the present disclosure.

### DESCRIPTION OF EMBODIMENTS

The embodiments of the present disclosure are described in more detail below with reference to the accompanying drawings. Although some embodiments of the present disclosure are shown in the accompanying drawings, it should be understood that the present disclosure can be implemented in various forms and should not be construed as being limited to the embodiments set forth herein. On the contrary, these embodiments are provided for a more thorough and complete understanding of the present disclosure. It should be understood that the accompanying drawings and embodiments of the present disclosure are for illustrative purposes only and are not intended to limit the protection scope of the present disclosure.

In addition, it should also be noted that, for ease of description, only parts related to the relevant disclosure are shown in the accompanying drawings. Embodiments of the present disclosure and features in the embodiments may be mutually combined in a case that no conflict occurs.

It should be noted that concepts such as "first" and "second" mentioned in the present disclosure are only used to distinguish between different apparatuses, modules, or units, and are not used to limit the sequence of functions performed by these apparatuses, modules, or units or interdependence.

It should be noted that the modifications of "a" and "a plurality of" mentioned in the present disclosure are schematic rather than limiting, and a person skilled in the art should understand that unless the context clearly indicates otherwise, they should be understood as "one or more".

The names of messages or information exchanged between a plurality of apparatuses in the implementations of the present disclosure are used for illustrative purposes only, and are not used to limit the scope of these messages or information. Before operations such as collection, storage, and use of personal information (for example, input information or preference information) of a user in the present disclosure are performed, a related organization or person fulfills obligations including assessing personal information security, fulfilling an obligation to notify a personal information subject, obtaining authorization and consent of the personal information subject in advance, and the like.

The present disclosure is described in detail below with reference to the accompanying drawings and the embodiments.

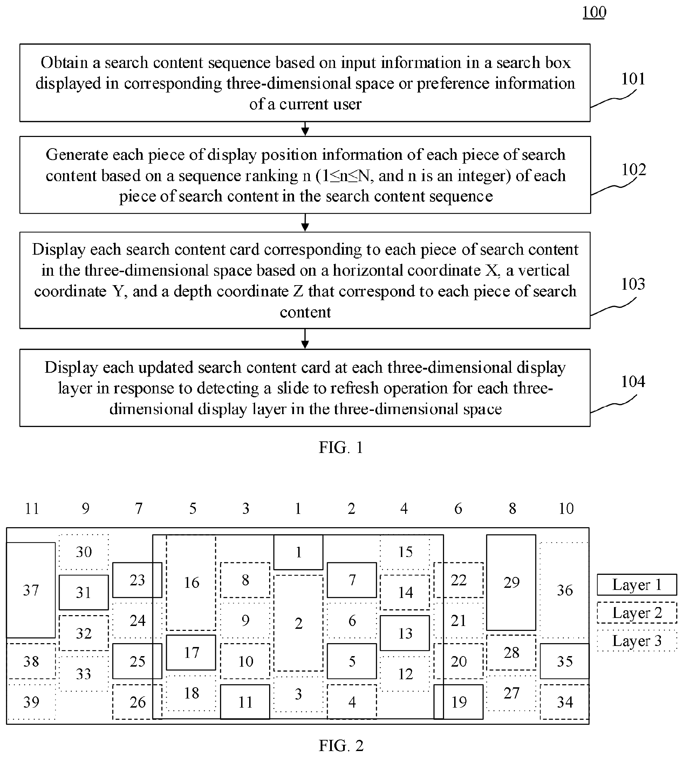

FIG. 1 is a flowchart 100 of some embodiments of a search content display method for three-dimensional space according to the present disclosure. The search content display method for three-dimensional space includes the following steps.

Step 101: Obtain a search content sequence based on input information in a search box displayed in corresponding three-dimensional space or preference information of a current user.

In some embodiments, an execution body (for example, an AR device) of the search content display method for three-dimensional space may obtain the search content sequence from a serving end in a wired connection manner or a wireless connection manner based on the input information in the search box displayed in the corresponding three-dimensional space or the preference information of the current user. The three-dimensional space may be space that has a depth attribute and that is used for fusion with a real scene. The search box may be a box used for input of information to be searched for. The input information may be information for confirming a search. For example, the input information may be text entered by using a keyboard. The input information may alternatively be a voice or a text input by using a voice. For another example, the input information may be an image. The current user may be a user wearing the AR device. The preference information may be preconfigured information that represents a user preference attribute. For example, the preference information may include but is not limited to a preferred news type and a preferred information presentation manner (a video, a picture and text, and a text). The search content sequence may be content retrieved based on the input information or the preference information. A content type of each piece of search content in the search content sequence may include but is not limited to a video type, a picture and text type, and a text type. Optionally, the video type may be specifically classified into a horizontal video type and a vertical video type. For example, a video aspect ratio of the horizontal video type may be 16:9. A video aspect ratio of the vertical video type may be 9:16. The search content sequence may include N pieces of search content, and each piece of search content is ranked based on information popularity. For example, the information popularity may be determined based on information initial popularity, information interactive popularity, and popularity that decreases with time. All pieces of search content in the search content sequence may be arranged in descending order of information popularity.

It should be noted that the wireless connection manner may include but is not limited to a 3G/4G connection, a Wi-Fi connection, a Bluetooth connection, a WiMAX connection, a Zigbee connection, a UWB (ultra-wideband) connection, and another wireless connection manner that is known currently or developed in the future.

Step 102: Generate each piece of display position information of each piece of search content based on a sequence ranking n (1≤n≤N, and n is an integer) of each piece of search content in the search content sequence.

In some embodiments, the execution body may generate, each piece of display position information of each piece of search content based on the sequence ranking n (1≤n≤N, and n is an integer) of each piece of search content in the search content sequence. In practice, the execution subject may sequentially arrange all pieces of search content on two sides from top to bottom from an initial horizontal coordinate, to obtain a horizontal coordinate and a vertical coordinate of each piece of search content. Area sizes corresponding to all pieces of search content may be the same or may vary based on content types. The initial horizontal coordinate may correspond to a first position at the top in the middle of a field of view area. A horizontal coordinate X represents a horizontal ranking relative to a camera position. A vertical coordinate Y represents a vertical ranking relative to a horizontal coordinate line X. A horizontal coordinate on a left side of the initial horizontal coordinate may be a negative value. A horizontal coordinate on a right side of the initial horizontal coordinate may be a positive value. An initial vertical coordinate may be a first position at the top in the middle of a field of view area. The vertical coordinate may be a positive value. A vertical downward direction may be a positive direction. Then, all the pieces of search content may be sequentially classified into three-dimensional display layers in the three-dimensional space. A classification manner may be a sequential polling manner. For example, the three-dimensional space may include four three-dimensional display layers. The execution body may classify a first piece of search content into a first three-dimensional display layer, classify a second piece of search content into a second three-dimensional display layer, classify a third piece of search content into a third three-dimensional display layer, classify a fourth piece of search content into a fourth three-dimensional display layer, classify a fifth piece of search content into the first three-dimensional display layer, and so on. Then, a ranking of a three-dimensional display layer corresponding to each piece of search content may be determined as a depth coordinate, and the horizontal coordinate, the vertical coordinate, and the depth coordinate that correspond to the search content are determined as the display position information of the search content. A depth coordinate Z represents a depth ranking relative to the camera position. A larger depth coordinate may represent a longer distance from the camera position.

Optionally, any three-dimensional display layer in the three-dimensional space corresponds to a pre-divided card display column sequence. The card display column sequence is arranged in ascending order in a counter-clockwise direction from a central position. For example, a central axis in a field of view may be used as a middle column, that is, a first column. Even-numbered columns (a second column, a fourth column, a sixth column, an eighth column, and a tenth column) may be on a right side. Odd-numbered columns (a third column, a fifth column, a seventh column, a ninth column, and an eleventh column) may be on a left side. The number of search content cards that are displayable in each card display column is less than a preset number. For example, the preset number may be 4. Optionally, a total height of the search content cards that are displayable in each card display column and spacings between the cards may be less than a preset height. For example, the preset height may be 1270 px.

In some optional implementations of some embodiments, the execution body may generate each piece of display position information of each piece of search content by using the following steps:
Step 1: Determine a card size corresponding to the search content based on the content type corresponding to each piece of search content in the search content sequence. All determined card sizes include a same card width. In practice, a card size corresponding to each content type may be preset. For example, a card size corresponding to the video type may be a card size of a video thumbnail aspect ratio of 9:16 (vertical video) or 16:9 (horizontal video). The card size of the video thumbnail aspect ratio of 9:16 may be 320 px: (569 px+100 px). 320 px may be the card width, 569 px may be a height of a cropped video thumbnail, and 100 px may be a height of a search content title. The card size of the video thumbnail aspect ratio of 16:9 may be 320 px: (180 px+100 px). 180 px may be a height of a cropped video thumbnail, and 100 px may be a height of a search content title. A card size corresponding to the picture and text type or the text type may be 320 px: (240 px+100 px). 240 px may be a cropped thumbnail or a height of a text box. A size aspect ratio of the cropped thumbnail or the text box may be 4:3.
Step 2: Determine a first card display column in the card display column sequence as a current card display column.
Step 3: Determine a first piece of search content in the search content sequence as current search content.
Step 4: Perform the following loop steps based on the current card display column and the current search content:
   Sub-step 1: In response to determining that a remaining display size of the current card display column is larger than a card size corresponding to the current search content, and the number of pieces of to-be-displayed search content corresponding to the current card display column is less than a difference between the preset number and a preset value, determine a horizontal coordinate and a vertical coordinate that correspond to the current search content based on an initial vertical coordinate corresponding to the current card display column or a vertical coordinate corresponding to a last piece of to-be-displayed search content, use a next piece of search content of the current search content as current search content, and perform the loop step again. The remaining display size may be a size of remaining space in which a card may be arranged in the current card display column. Each piece of to-be-displayed search content corresponding to the current card display column may be each piece of search content that is determined to be arranged in the current card display column. An initial vertical coordinate corresponding to the first card display column may be at the top, that is, may be 1. An initial vertical coordinate corresponding to a second card display column may be at the bottom, that is, may be the preset number 4. An initial vertical coordinate corresponding to a third card display column may be at the top, that is, may be 1. It may be understood that, in this case, all the pieces of search content may be arranged in a counter-clockwise direction in all the card display columns. In practice, in response to determining that the current card display column corresponds to no search content, the execution body may determine the horizontal coordinate of the current search content as a column number corresponding to the current card display column, and determine the initial vertical coordinate corresponding to the current card display column as the vertical coordinate of the current search content. The execution body may further determine a last piece of search content corresponding to the current card display column as a previous piece of search content in response to determining that the current card display column corresponds to search content. A next vertical coordinate of a vertical coordinate corresponding to the previous piece of search content may be determined as the vertical coordinate of the current search content in response to the initial vertical coordinate corresponding to the current card display column being at the top. A previous vertical coordinate of a vertical coordinate corresponding to the previous piece of search content may be determined as the vertical coordinate of the current search content in response to the initial vertical coordinate corresponding to the current card display column being at the bottom.
   Sub-step 2: In response to determining that the remaining display size of the current card display column is larger than the card size corresponding to the current search content, or the number of pieces of to-be-displayed search content corresponding to the current card display column is less than the difference between the preset number and the preset value, use a next card display column of the current card display column as a current card display column, and perform the loop step again. Therefore, two-dimensional arrangement coordinates of each piece of search content may be determined based on an information popularity ranking of the search content, a card size, and an arrangement sequence of all the card display columns.
Step 5: Perform the following steps for each piece of search content in the search content sequence:
   Sub-step 1: Determine a first value as a depth coordinate corresponding to the search content in response to determining that a sequence number of the search content meets a first preset exact division condition corresponding to the first value. The first value may be 2. The first preset exact division condition may be that the sequence number is divisible by 2 but is indivisible by 3.
   Sub-step 2: Determine a second value as the depth coordinate corresponding to the search content in response to determining that the sequence number of the search content meets a second preset exact division condition corresponding to the second value. The second value may be 3. The second preset exact division condition may be that the sequence number is divisible by 3.
   Sub-step 3: Determine a third value as the depth coordinate corresponding to the search content in response to determining that the sequence number of the search content does not meet the first preset exact division condition or the exact second preset exact division condition. The second value is greater than the first value, and the first value is greater than the third value The third value may be 1.
   Sub-step 4: Determine a horizontal coordinate, a vertical coordinate, and the depth coordinate that correspond to the search content as display position information corresponding to the search content. Therefore, three-dimensional coordinates of the search content may be determined based on an information popularity ranking of the search content.

For example, for a schematic diagram of arranging search content, refer to FIG. 2. In FIG. 2, the card display column sequence may be divided into 11 columns. A middle column is a first column. Odd-numbered columns are on a left side. Even-numbered columns are on a right side. There are 39 pieces of search content. A smaller sequence number indicates higher information popularity. Search content with a relatively small sequence number is preferentially arranged at a middle position. Search content in a first column is arranged from top to bottom in the field of view area, and a first piece of search content is aligned with a top edge of the field of view area. Search content in a second column is arranged from bottom to top in the field of view area, and a last piece of search content is aligned with the top edge of the field of view area. Search content in a third column is arranged from top to bottom in the field of view area, and a last piece of search content is aligned with a bottom edge of the field of view area. The search content is classified into three different three-dimensional display layers.

Optionally, for each piece of search content in the search content sequence, the execution body may determine the depth coordinate of each piece of search content based on a preset layer arrangement sequence. For example, the layer arrangement sequence may be "1, 2, 3, 2, 1, 3". For example, a depth coordinate of a first piece of search content may be 1. A depth coordinate of a second piece of search content may be 2. A depth coordinate of a third piece of search content may be 3. A depth coordinate of a fourth piece of search content may be 2. A depth coordinate of a fifth piece of search content may be 1. A depth coordinate of a sixth piece of search content may be 3. A depth coordinate of a seventh piece of search content may be 1. The depth coordinate of each piece of search content may be determined based on such a sequential loop.

Step 103: Display each search content card corresponding to each piece of search content in the three-dimensional space based on the horizontal coordinate X, the vertical coordinate Y, and the depth coordinate Z that correspond to each piece of search content.

In some embodiments, the execution body may display each search content card corresponding to each piece of search content in the three-dimensional space based on the horizontal coordinate X, the vertical coordinate Y, and the depth coordinate Z that correspond to each piece of search content. The search content card displays first-page content information of the corresponding search content. The first-page content information may be information for previewing by the user. Specifically, for a search content card with search content whose content type is the video type, first-page content information of the search content card may include a video thumbnail cropped based on a preset size and a character string in a search content title that can be accommodated in a preset title size. For a search content card with search content whose content type is the picture and text type, first-page content information of the search content card may include a main image cropped based on a preset size and a character string in a search content title that can be accommodated in a preset title size. For a search content card with search content whose content type is the text type, first-page content information of the search content card may include a text box in a preset size and a character string in a search content title that can be accommodated in a preset title size. The text box may display brief content in the search content. Brief content that is not displayed due to a limitation of a size of the text box can be represented by an ellipsis. Herein, all preset sizes and preset title sizes may be the same or different. The search content card is displayed based on a ranking in the search content sequence at a three-dimensional display layer that corresponds to the depth coordinate corresponding to the search content. Each piece of search content corresponding to each search content card that corresponds to the field of view area is arranged at a front end of the search content sequence at each three-dimensional display layer in the three-dimensional space. In this way, a wearing user can watch a search content card with relatively high popularity in a front view. Display brightness of a three-dimensional display layer relatively far away from the camera position is less than display brightness of a three-dimensional display layer relatively close to the camera position. For example, brightness of a first three-dimensional display layer may be 1 (the brightness is a normal value), brightness of a second three-dimensional display layer may be 0.7 (the brightness decreases by 30%), and brightness of a third three-dimensional display layer may be 0.4 (the brightness decreases by 60%). Therefore, the wearing user can better watch a search content card at a front three-dimensional display layer. All search content cards have a same horizontal width. Therefore, all the arranged search content cards may be relatively regular.

In practice, for each piece of search content, the execution body may determine a display position and a three-dimensional display layer of a search content card based on the horizontal coordinate X, the vertical coordinate Y, and the depth coordinate Z that correspond to the search content. A preset search content card template may be displayed at the display position at the three-dimensional display layer, and first-page content information corresponding to the search content is displayed in the search content card template. Herein, the display position may be a three-dimensional coordinate position mapped onto a three-dimensional coordinate system. The search content card template can be a blank card template. An edge of the search content card template may be covered with a shadow with a thickness. For example, the edge of the search content card template may present a transparent luminous glass shadow with a thickness. Card sizes corresponding to all search content card templates may be the same or may vary based on content types.

Optionally, the search content card may include a primary area and a secondary area. For a search content card with search content whose content type is the video type, a primary area may be used to display a video thumbnail, a video playing icon may be further displayed in the video thumbnail displayed on the search content card, and a secondary area may be used to display a search content title. For a search content card with search content whose content type is the picture and text type, a primary area may be used to display a main image, and a secondary area may be used to display a search content title. For a search content card with search content whose content type is the text type, a primary area may be used to display a text box, an icon of a text source application may be further displayed in the text box displayed on the search content card, and a secondary area may be used to display a search content title. It may be understood that, due to a limitation of an area size, a search content title displayed in a secondary area may be a partial character string, and a remaining character string may be represented by using an ellipsis.

Optionally, all search content cards corresponding to the first card display column may be moved upward to the top edge of the field of view area as a whole. That is, the top of the first search content card is aligned with the top edge of the field of view area. All search content cards corresponding to the second card display column and the third card display column may be moved downward to the bottom edge of the field of view area as a whole. That is, the bottom of a last search content card is aligned with the bottom edge of the field of view area. All search content cards corresponding to the fourth card display column and the fifth card display column may be moved upward to the top edge of the field of view area as a whole. That is, the top of the first search content card is aligned with the top edge of the field of view area. It may be understood that an alignment direction of a card display column whose search content card needs to overlap the top edge or the bottom edge of the field of view area starts to be reversed in each even-numbered column. It may be understood that, the alignment direction starts to be reversed in each even-numbered column, so that arranged search content cards are evenly distributed in space.

Step 104: Display each updated search content card at each three-dimensional display layer in response to detecting a slide to refresh operation for each three-dimensional display layer in the three-dimensional space.

In some embodiments, the execution body may display each updated search content card at each three-dimensional display layer in response to detecting the slide to refresh operation for each three-dimensional display layer in the three-dimensional space. The slide to refresh operation may be a left slide operation performed on the entire three-dimensional space. Herein, the left slide operation may be determined by identifying a user gesture. For example, the left slide operation may correspond to a left waving gesture. Each piece of search content corresponding to each updated search content card may be search content corresponding to the input information or the preference information, and has corresponding information popularity less than that of each piece of search content in the search content sequence. In practice, for a manner in which the execution body displays each updated search content card at each three-dimensional display layer, refer to step 102 and step 103. Details are not described herein again.

It should be noted that the three-dimensional space may be displayed in an AR device whose FOV range is 40 degrees to 60 degrees. A value range of N is 11 to 55. Herein, a total of 11 to 55 search content cards that are displayed in the three-dimensional space may be a number range that is determined based on an FOV size and that is convenient for observation by the user. A value range of the horizontal coordinate X is -5 to 5. Herein, that the value range of the horizontal coordinate X is -5 to 5 may represent that a maximum of 11 columns of search content cards are displayable in the three-dimensional space, and the other 5 columns are separately distributed on two sides of the middle column. The maximum of 11 columns of search content cards displayed in the three-dimensional space may be a number range that is determined based on the FOV size and that is convenient for observation by the user. A value range of the depth coordinate Z is 1 to 4. That the value range of the depth coordinate Z is 1 to 4 may represent that a maximum of four three-dimensional display layers used to display search content cards may be displayed in the three-dimensional space, the maximum of four three-dimensional display layers that are displayed in the three-dimensional space may be a number range determined based on a sensing capability of the user for a spatial layer, and too many layers cause spatial content disorder.

Optionally, the value range of Z may be 1 to 3. A maximum of three three-dimensional display layers that are displayed in the three-dimensional space may be a number range determined based on the sensing capability of the user for the spatial layer, and may further reduce spatial content disorder in the three-dimensional space. Z=3 when n is divisible by 3; or Z=2 when n is indivisible by 3 but is divisible by 2; or Z=1 when n is indivisible by 3 or 2. Therefore, search content arranged in front may be classified as much as possible into a three-dimensional display layer relatively close to the camera position.

Optionally, in response to detecting a slide to back operation for each three-dimensional display layer in the three-dimensional space, and each updated search content card being currently displayed at each three-dimensional display layer, the execution body may further display, at each three-dimensional display layer, each search content card displayed at the three-dimensional display layer at a previous time. The slide to back operation may be an operation of backing to a previous state for display. For example, the slide to back operation may be a right slide operation. Herein, the right slide operation may be determined by identifying a user gesture. For example, the right slide operation may correspond to a right waving gesture. Therefore, the user can view historical display content in the three-dimensional space by using a gesture operation. It may be understood that a number of slide to back operations may be set to be less than or equal to a preset number of times. In this way, the user can view the historical display content for a limited number of times.

Optionally, each search content card edge part is further displayed on either side of the field of view area. Display brightness of each search content card edge part is less than display brightness of a three-dimensional display layer corresponding to the search content card edge part. For example, the display brightness of the search content card edge part may be 40% lower than the display brightness of the three-dimensional display layer at which the search content card is located.

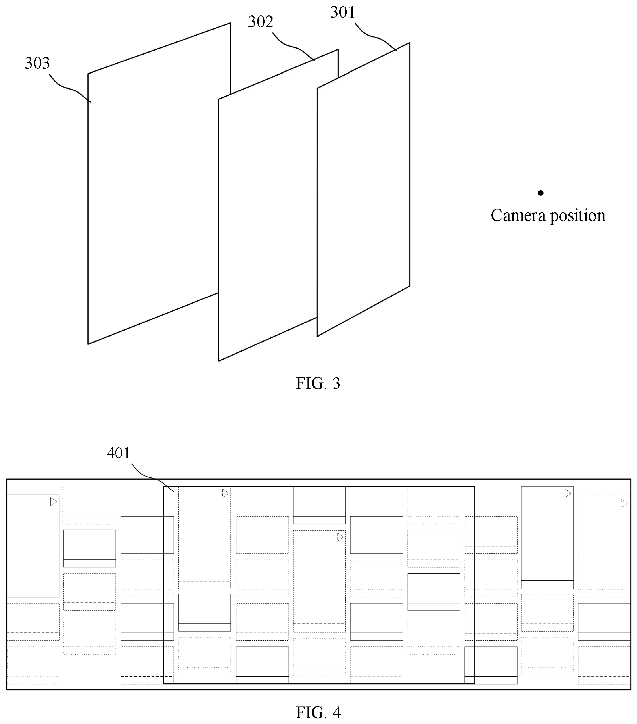

For example, for each three-dimensional display layer in the three-dimensional space, refer to FIG. 3. In FIG. 3, all the search content cards are arranged at three layers, including a three-dimensional display layer 301, a three-dimensional display layer 302, and a three-dimensional display layer 303. Display brightness of all the layers is different, and the display brightness of the three-dimensional display layer close to the camera position is relatively high. Higher display brightness indicates brighter display content. For each displayed search content card, refer to FIG. 4. FIG. 4 may show display content in the three-dimensional space watched by the user in the front view, and five columns of complete search content cards may be displayed in a field of view area 401. The user can watch other three columns of search content cards on either side by turning the head. Each search content card edge part is further displayed on either side of the field of view area 401, including each search content card edge part on a left side and each search content card edge part on a right side.

Optionally, in response to detecting a field of view moving operation in the three-dimensional space, the execution body may further display each search content card in an updated field of view area corresponding to the field of view moving operation, and for each search content card edge part on a side corresponding to the field of view moving operation in the field of view area, update display brightness of the search content card edge part to display brightness of a three-dimensional display layer corresponding to the search content card edge part. The field of view moving operation may be an operation that the user turns the head to watch another area, a field of view may be moved accordingly, and the field of view area is also updated accordingly. Therefore, when the user watches an area in which the search content card edge part is located, the display brightness of the search content card edge part may be restored to originally specified display brightness of the three-dimensional display layer.

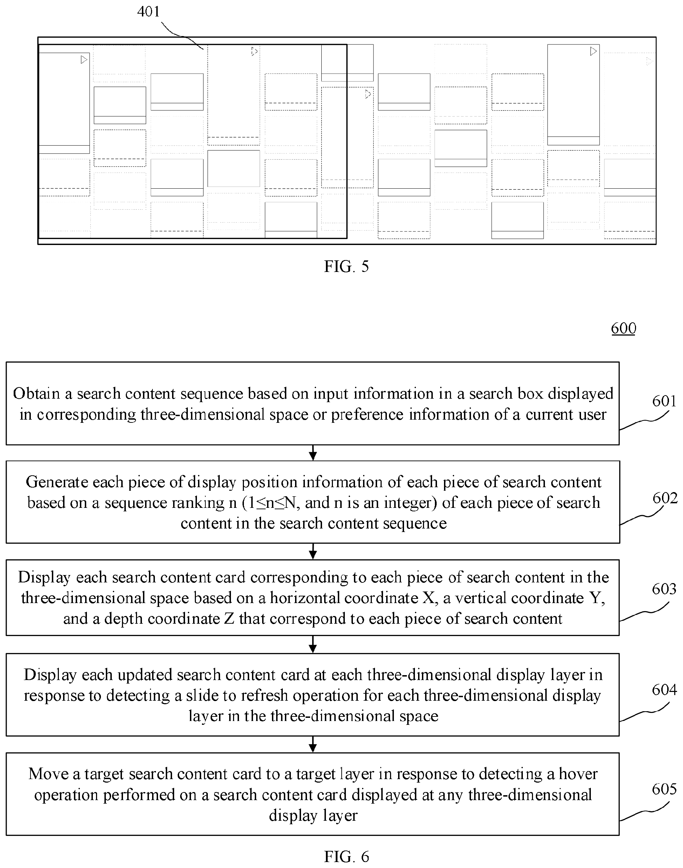

For example, the user turns the head leftward in the three-dimensional space corresponding to FIG. 4. For each search content card displayed in the three-dimensional space, refer to FIG. 5. In FIG. 5, remaining three columns of search content cards on the left side may be displayed, and each search content card edge part whose display brightness is reduced in FIG. 4 may be restored to display brightness of a three-dimensional display layer at which the search content card edge part is located in FIG. 5.

Optionally, the execution body may scale up and display a target search content card at any three-dimensional display layer in response to detecting a hover operation performed on a search content card displayed at the any three-dimensional display layer. The target search content card is a search content card corresponding to the hover operation. A size of a secondary area used to display a search content title in the scaled-up and displayed target search content card is larger than an original size of the secondary area. When a content type corresponding to the target search content card is the video type, the scaled-up and displayed target search content card may automatically play a video. When a content type corresponding to the target search content card is the picture and text type, a size of a primary area in the scaled-up and displayed target search content card is larger than an original size of the primary area, to scale up a picture. When a content type corresponding to the target search content card is the picture and text type or the text type, display content in the scaled-up and displayed target search content card supports upward/downward page turning. In practice, the target search content card may be uniformly scaled up by a predetermined multiple. For example, the predetermined multiple may be 1.3 times.

The foregoing embodiments of the present disclosure have the following beneficial effects: The search content display method for three-dimensional space in some embodiments of the present disclosure improves adaptability of displayed search content to the AR device, and improves a sense of three-dimensionality and a sense of space of a wearing user during watching. Specifically, poor adaptability of the displayed search content to the AR device and a poor sense of three-dimensionality and a poor sense of space of the wearing user during watching are caused by the following: A tiled display manner is the same as a display manner in a two-dimensional application, which results in poor adaptability of the displayed search content to the AR device, and the poor sense of three-dimensionality and the poor sense of space of the wearing user during watching. Based on this, in the search content display method for three-dimensional space in some embodiments of the present disclosure, a search content sequence is obtained based on input information in a search box displayed in corresponding three-dimensional space or preference information of a current user. The search content sequence includes N pieces of search content, and each piece of search content is ranked based on information popularity; Therefore, each piece of search content arranged based on popularity may be obtained based on input information of the user or the preference information of the user. Each piece of display position information of each piece of search content is generated based on a sequence ranking n (1≤n≤N, and n is an integer) of each piece of search content in the search content sequence. Display position information in each piece of display position information includes a horizontal coordinate X, a vertical coordinate Y, and a depth coordinate Z. The horizontal coordinate X represents a horizontal ranking relative to a camera position. The vertical coordinate Y represents a vertical ranking relative to a horizontal coordinate line X. A depth coordinate Z represents a depth ranking relative to the camera position. Therefore, the display position information of each piece of search content may be determined based on a popularity ranking of each piece of search content. The display position information includes the horizontal coordinate X, the vertical coordinate Y, and the depth coordinate Z, which may represent that the display position information is three-dimensional. Each search content card corresponding to each piece of search content is displayed in the three-dimensional space based on the horizontal coordinate X, the vertical coordinate Y, and the depth coordinate Z that correspond to each piece of search content. The search content card displays first-page content information of the corresponding search content. The search content card is displayed based on a ranking in the search content sequence at a three-dimensional display layer that corresponds to the depth coordinate corresponding to the search content. Each piece of search content corresponding to each search content card that corresponds to a field of view area is arranged at a front end of the search content sequence at each three-dimensional display layer in the three-dimensional space, and display brightness of a three-dimensional display layer relatively far away from the camera position is less than display brightness of a three-dimensional display layer relatively close to the camera position. All search content cards have a same horizontal width. Therefore, all search content may be displayed at different layers in a card form in the three-dimensional space based on the three-dimensional display position information, and search content with relatively high popularity may be displayed in a card form in the field of view area. All the displayed search content cards have a same horizontal width, so that all the search content cards can be arranged regularly, to facilitate watching by a wearing user. The display brightness of the three-dimensional display layer relatively close to the camera position is relatively high, so that the wearing user watches display content at a front three-dimensional display layer. Each updated search content card is displayed at each three-dimensional display layer in response to detecting a slide to refresh operation for each three-dimensional display layer in the three-dimensional space. The three-dimensional space is displayed in an AR device whose FOV range is 40 degrees to 60 degrees. A value range of N is 11 to 55. A value range of the horizontal coordinate X is -5 to 5. A value range of the depth coordinate Z is 1 to 4. Therefore, all the search content cards displayed at all the three-dimensional display layers in the three-dimensional space may be refreshed as a whole. In addition, because all the displayed search content cards are displayed at all the three-dimensional display layers, all the three-dimensional display layers are at different distances from the camera position and have different display brightness, and a combination with a function of the AR device is enhanced, adaptability of the displayed search content to the AR device is improved. Further, because the displayed search content cards correspond to different depths and shades, a sense of three-dimensionality and a sense of space of the wearing user during watching of the search content cards are improved. Therefore, this improves the adaptability of the displayed search content to the AR device, and improves the sense of three-dimensionality and the sense of space of the wearing user during watching.

Further, FIG. 6 shows a procedure 600 of some other embodiments of a search content display method for three-dimensional space. The procedure 600 of the search content display method for three-dimensional space includes the following steps:
Step 601: Obtain a search content sequence based on input information in a search box displayed in corresponding three-dimensional space or preference information of a current user.
Step 602: Generate each piece of display position information of each piece of search content based on a sequence ranking n (1≤n≤N, and n is an integer) of each piece of search content in the search content sequence.
Step 603: Display each search content card corresponding to each piece of search content in the three-dimensional space based on a horizontal coordinate X, a vertical coordinate Y, and a depth coordinate Z that correspond to each piece of search content.
Step 604: Display each updated search content card at each three-dimensional display layer in response to detecting a slide to refresh operation for each three-dimensional display layer in the three-dimensional space.

In some embodiments, for a specific implementation of step 601 to step 604 and technical effects brought by step 601 to step 604, refer to step 101 to step 104 in those embodiments corresponding to FIG. 1. Details are not described herein again.

Step 605: Move a target search content card to a target layer in response to detecting a hover operation performed on a search content card displayed at any three-dimensional display layer.

In some embodiments, an execution body (for example, an AR device) of the search content display method for three-dimensional space may move the target search content card to the target layer in response to detecting the hover operation performed on the search content card displayed at the any three-dimensional display layer. The hover operation may be an operation that an anchor stays on the search content card for preset duration. For example, the anchor may stay on the search content card by using an operation ray, or may anchor the search content card for preset duration in a head control manner, or may hover on the search content card by using a mouse. The target search content card is a search content card corresponding to the hover operation. The target layer may be a layer in front of the three-dimensional display layer. A distance between the target layer and a camera position is less than a distance between each three-dimensional display layer and the camera position. A card size of the target search content card displayed at the target layer is larger than a card size of the target search content card displayed at the any three-dimensional display layer. For example, the card size of the target search content card displayed at the target layer may be two times the card size of the target search content card displayed at the any three-dimensional display layer. For a search content card of a picture and text type and a search content card of a text type, the search content card displayed at the target layer may display a main image and a text box in an original size aspect ratio, and the search content card may display a slider, so that a user slides to view display content on the search content card. All search content titles can be displayed on the search content card displayed at the target layer.

In some optional implementations of some embodiments, the execution body may move the target search content card to the target layer by using the following steps:
Step 1: Determine the card size of the target search content card at the any three-dimensional display layer.
Step 2: Determine a scale-up multiple of the target search content card based on the determined card size. In practice, the execution body may determine a first preset multiple as a scale-up multiple in response to determining that the target search content card is of a video type, and a video thumbnail aspect ratio corresponding to the target search content card is a first preset aspect ratio. In practice, the execution body may further determine a second preset multiple as a scale-up multiple in response to determining that the target search content card is of a video type, and a video thumbnail aspect ratio corresponding to the target search content card is a second preset aspect ratio. The execution body may further determine a third preset multiple as a scale-up multiple in response to determining that the target search content card is of a picture and text type. The third preset multiple may be greater than the second preset multiple. The second preset multiple may be greater than the first preset multiple. For example, the first preset multiple may be 1.3. The second preset multiple may be 2. The third preset multiple may be 3. The first preset aspect ratio may be 9:16. The second preset aspect ratio may be 16:9.
Step 3: Generate the card size of the target search content card at the target layer as a target card size based on the scale-up multiple and the determined card size. In practice, the execution body may determine a product of the scale-up multiple and the card size as a target card size.
Step 4: Move the target search content card to the target layer, and scale up the target search content card to the target card size. In this way, a progressive scale-up animation effect can be presented in a process in which the target search content card is moved out of the three-dimensional display layer to the target layer.

In some optional implementations of some embodiments, the execution body may move the target search content card to the target layer in response to determining that the any three-dimensional display layer is not a three-dimensional display layer closest to the camera position; and for each three-dimensional display layer before the any three-dimensional display layer, move each search content card adjacent to the target search content card at the three-dimensional display layer to either side in response to determining that the target search content card is moved to the three-dimensional display layer, and reset each moved search content card at the three-dimensional display layer in response to determining that the target search content card is moved out of the three-dimensional display layer. In this way, each search content card adjacent to the target search content card at a front three-dimensional display layer can be moved to either side and then reset, so that the target search content card present a forward moving animation effect.

Optionally, the execution body may further perform the following steps:
Step 1: In response to detecting a selection operation performed on the target search content card at the target layer, scale up and display the target search content card at a central position of the target layer, and hide each search content card displayed at each three-dimensional display layer. The selection operation may be an operation of confirming to select the target search content card. For example, the selection operation may be a gesture operation. For example, the selection operation may be an operation that a thumb and an index finger pinch and then are separated. The central position may be a central position of a field of view area at the target layer. A refresh control and a return control are further displayed at the target layer. The refresh control may be used to refresh content related to the target search content card. The return control may be used to return a previous interface state for display. Therefore, sub-space of the target search content card may be entered for display.
Step 2: Obtain a related content sequence that corresponds to search content corresponding to the target search content card. Herein, each piece of related content in the related content sequence may be each piece of related content whose similarity with the target search content card meets a preset condition. The preset condition may be that the similarity is arranged at a preset ranking. The preset ranking may be preset. All pieces of related content in the related content sequence may be arranged in descending order of information popularity.
Step 3: Display each related content card corresponding to the related content sequence around the target search content card in the three-dimensional space. In practice, the execution body may display each related content card around the target search content card based on a preset sub-space card display column sequence. An odd-numbered column in the sub-space card display column sequence may be arranged on a left side of the target search content card. An even-numbered column in the sub-space card display column sequence may be arranged on a right side of the target search content card. For an arrangement manner of the related content sequence in the sub-space card display column, refer to step 102 and step 103 in those embodiments corresponding to FIG. 1. Details are not described herein again. Optionally, after a depth coordinate of each related content card is determined, a depth coordinate of a related content card at a three-dimensional display layer after a first three-dimensional display layer may be randomly determined as 1. Therefore, more related content cards can be preferentially displayed at a front layer. For example, a depth coordinate of 1/3 related content cards at a second three-dimensional display layer may be randomly determined as 1. A depth coordinate of 2/3 related content cards at a third three-dimensional display layer may be randomly determined as 1.

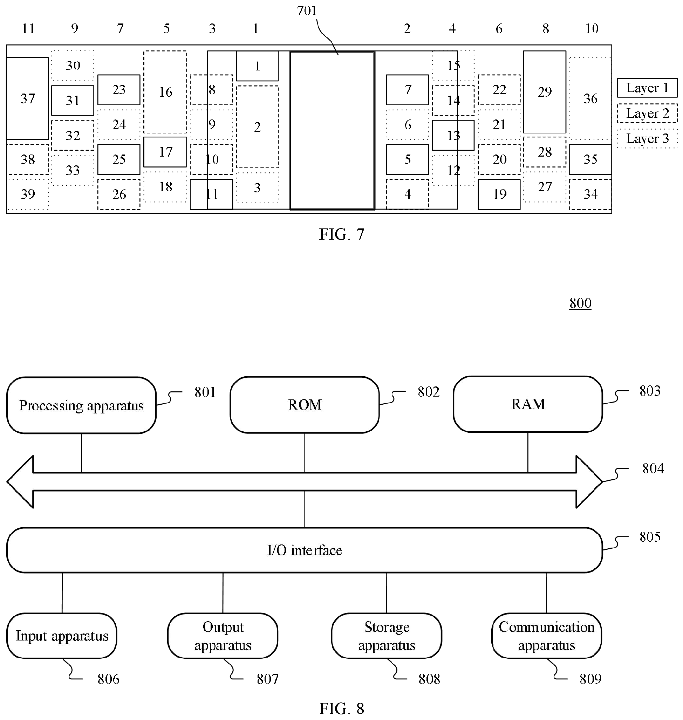

For example, for a schematic diagram of arranging related content cards, refer to FIG. 7. In FIG. 7, the sub-space card display column sequence may be divided into 11 columns. A column close to a middle position on a left side is a first column. An odd-numbered column is on a left side of the target search content card 701, and an even-numbered column is on a right side of the target search content card 701. There are 39 related content cards. A smaller sequence number indicates higher information popularity. A related content card with a relatively small sequence number is preferentially arranged at the middle position. Related content cards in a first column are arranged from top to bottom in the field of view area, and a first related content card is aligned with a top edge of the field of view area. Related content cards in a second column are arranged from bottom to top in the field of view area, and a last related content card is aligned with the top edge of the field of view area. Related content cards in a third column are arranged from top to bottom in the field of view area, and a last related content card is aligned with a bottom edge of the field of view area. The related content cards are classified into three different three-dimensional display layers.

In some optional implementations of some embodiments, the execution body may scale up and display the target search content card at the central position of the target layer by using the following steps:
Step 1: Scale up the target search content card by a target multiple corresponding to the field of view area in response to determining that a content type corresponding to the target search content card is a picture and text type or a text type. The target multiple may be a multiple that enables a scaled-up target search content card to basically fulfill the field of view area. For example, the target multiple may be 3.5 times. In this way, it is convenient for the user to read a text.
Step 2: Display the scaled-up target search content card at the central position of the target layer.
Step 3: Slide and display display content corresponding to the content slide operation on the target search content card in response to detecting a content slide operation performed on the target search content card. In this way, the user can slide to view picture and text content and text content.

It can be learned from FIG. 6 that, compared with the descriptions in some embodiments corresponding to FIG. 1, the procedure 600 of the search content display method for three-dimensional space in some embodiments corresponding to FIG. 6 embodies a step expanded after a search content card hovers. In this way, in the solution described in these embodiments, the hovering search content card may be moved to a target layer relatively close to the user for scaling-up and display, to facilitate detailed viewing by the user

In the following, FIG. 8 is a schematic structural diagram of an AR device 800 applied to implement some embodiments of the present disclosure. The AR device shown in FIG. 8 is merely an example and should not impose any limitation on a functional and a scope of use of the embodiments of the present disclosure.

As shown in FIG. 8, the AR device 800 may include a processing apparatus 801 (for example, a central processing unit or a graphics processing unit) that may perform various appropriate actions and processing based on a program stored in a read-only memory (ROM) 802 or a program loaded from a storage apparatus 808 into a random access memory (RAM) 803. The RAM 803 further stores various programs and data required by an operation of the AR device 800. The processing apparatus 801, the ROM 802, and the RAM 803 are connected to each other through a bus 804. An input/output (I/O) interface 805 is also connected to the bus 804.

Generally, the following apparatuses may be connected to the I/O interface 805: an input apparatus 806 including, for example, a touchscreen, a touchpad, a keyboard, a mouse, a camera, a microphone, an accelerometer, and a gyroscope; an output apparatus 807 including, for example, a micro display, a loudspeaker, and a vibrator; and a communication apparatus 809. The micro display is configured to cooperate with an optical element to perform imaging in front of an eye of a user. The communication apparatus 809 may allow the AR device 800 to communicate with another device in a wireless or wired manner to exchange data. Although FIG. 8 shows the AR device 800 with various apparatuses, it should be understood that it is not required to implement or possess all the apparatuses shown. Alternatively, more or fewer apparatuses may be implemented or possessed. Each block shown in FIG. 8 may represent one apparatus, or may represent a plurality of apparatuses as required.

In particular, according to some embodiments of the present disclosure, the process described above with reference to the flowchart may be implemented as a computer software program. For example, some embodiments of the present disclosure include a computer program product that includes a computer program carried on a computer-readable medium, and the computer program includes program code used to perform the method shown in the flowchart. In some such embodiments, the computer program may be downloaded from a network by using the communication apparatus 809 and installed, or installed from the storage apparatus 808, or installed from the ROM 802. When the computer program is executed by the processing apparatus 801, the foregoing functions defined in the method in some embodiments of the present disclosure are performed.

It should be noted that the computer-readable medium described in some embodiments of the present disclosure may be a computer-readable signal medium, a computer-readable storage medium, or any combination of the two. For example, the computer-readable storage medium may be but is not limited to an electrical system, apparatus, or device, a magnetic system, apparatus, or device, an optical system, apparatus, or device, an electromagnetic system, apparatus, or device, an infrared system, apparatus, or device, or a semiconductor system, apparatus, or device, or any combination thereof. More specific examples of the computer-readable storage medium may include but are not limited to the following: an electric connection with one or more wires, a portable computer disk, a hard disk, a random access memory (RAM), a read-only memory (ROM), an erasable programmable read-only memory (EPROM or a flash memory), an optical fiber, a portable compact disc read-only memory (CD-ROM), an optical storage component, a magnetic storage component, or any proper combination thereof. In some embodiments of the present disclosure, the computer-readable storage medium may be any tangible medium that includes or stores a program, and the program may be used by or in combination with an instruction execution system, apparatus, or component. In some embodiments of the present disclosure, the computer-readable signal medium may include a data signal propagated in a baseband or as a part of a carrier, and carries computer-readable program code. The data signal propagated in such a way can be in a plurality of forms, and includes but is not limited to an electromagnetic signal, an optical signal, or any proper combination thereof. The computer-readable signal medium may be alternatively any computer-readable medium other than the computer-readable storage medium, and the computer-readable signal medium may send, propagate, or transmit a program that is used by or in combination with an instruction execution system, apparatus, or component. The program code included in the computer-readable medium may be transmitted by using any proper medium, including but not limited to: a wire, an optical cable, an RF (radio frequency), or any proper combination of the foregoing mediums.

In some implementations, a client and a server may communicate with each other by using any currently known or future developed network protocol, such as an HTTP (HyperText Transfer Protocol, hypertext transfer protocol), and may be interconnected with any form or medium of digital data communication (for example, a communication network). Examples of the communication network include a local area network ("LAN"), a wide area network ("WAN"), an internet work (for example, the Internet), an end-to-end network (for example, an ad hoc end-to-end network), and any currently known or future developed network.

The foregoing computer-readable medium may be included in the AR device, or may exist separately and is not assembled into the AR device. The computer-readable medium carries one or more programs. When the one or more programs are executed by the AR device, the AR device is enabled to perform the following operations: obtaining a search content sequence based on input information in a search box displayed in corresponding three-dimensional space or preference information of a current user, where the search content sequence includes N pieces of search content, and each piece of search content is ranked based on information popularity; generating each piece of display position information of each piece of search content based on a sequence ranking n (1≤n≤N, and n is an integer) of each piece of search content in the search content sequence, where display position information in each piece of display position information includes a horizontal coordinate X, a vertical coordinate Y, and a depth coordinate Z, the horizontal coordinate X represents a horizontal ranking relative to a camera position, the vertical coordinate Y represents a vertical ranking relative to a horizontal coordinate line X, and the depth coordinate Z represents a depth ranking relative to the camera position; displaying each search content card corresponding to each piece of search content in the three-dimensional space based on the horizontal coordinate X, the vertical coordinate Y, and the depth coordinate Z that correspond to each piece of search content, where the search content card displays first-page content information of the corresponding search content, the search content card is displayed based on a ranking in the search content sequence at a three-dimensional display layer that corresponds to the depth coordinate corresponding to the search content, each piece of search content corresponding to each search content card that corresponds to a field of view area is arranged at a front end of the search content sequence at each three-dimensional display layer in the three-dimensional space, display brightness of a three-dimensional display layer relatively far away from the camera position is less than display brightness of a three-dimensional display layer relatively close to the camera position, and all search content cards have a same horizontal width; and displaying each updated search content card at each three-dimensional display layer in response to detecting a slide to refresh operation for each three-dimensional display layer in the three-dimensional space. The three-dimensional space is displayed in an AR device whose FOV range is 40 degrees to 60 degrees, a value range of N is 11 to 55, a value range of the horizontal coordinate X is -5 to 5, and a value range of the depth coordinate Z is 1 to 4.

Computer program code for performing operations in some embodiments of the present disclosure may be written in one or more programming languages or a combination thereof, such as Java, Smalltalk, and C++, which further include conventional procedural programming languages such as the "C" language or similar programming languages. The program code may be completely executed on a user computer, partially executed on a user computer, executed as an independent software package, partially executed on a user computer and partially executed on a remote computer, or completely executed on a remote computer or a server. In a case of the remote computer, the remote computer may be connected to the computer of the user through any kind of network, including a local area network (LAN) or a wide area network (WAN), or may be connected to an external computer (for example, connected through the Internet with the aid of an Internet service provider).

The flowcharts and the block diagrams in the accompanying drawings illustrate possible system architectures, functions, and operations of the system, the method, and the computer program product according to various embodiments of the present disclosure. In this regard, each block in the flowchart or the block diagram may represent a module, a program segment, or a part of code. The module, the program segment, or the part of the code includes one or more executable instructions used for implementing designated logic functions. It should also be noted that, in some implementations used as substitutes, functions annotated in blocks may alternatively occur in a sequence different from that annotated in the accompanying drawings. For example, two successively represented blocks may actually be performed basically in parallel, and sometimes the two blocks may be performed in a reverse sequence. This is determined by a related function. It should also be noted that each block in the block diagrams and/or the flowcharts, and a combination of the blocks in the block diagrams and/or the flowcharts may be implemented by a dedicated hardware-based system that executes specified functions or operations, or may be implemented by a combination of dedicated hardware and computer instructions.

The foregoing described functions in this specification may be performed at least in part by one or more hardware logic components. For example, without limitation, exemplary types of hardware logic components that may be used include: a field programmable gate array (FPGA), an application-specific integrated circuit (ASIC), an application specific standard part (ASSP), a system on chip (SOC), a complex programmable logic device (CPLD), and the like.

The above-mentioned descriptions are merely of some preferred embodiments of the present disclosure and an illustration of the applied technical principles. A person skilled in the art should understand that the scope of the present invention in the embodiments of the present disclosure is not limited to a technical solution formed by a specific combination of the foregoing technical features, but also covers another technical solution formed by any combination of the foregoing technical features or equivalent features without departing from the foregoing inventive concept, for example, a technical solution formed by replacing the foregoing feature with a technical feature disclosed (but not limited to) in the embodiments of the present disclosure and having a similar function.

## Claims

1. A search content display method for three-dimensional space, comprising:
obtaining a search content sequence based on input information in a search box displayed in corresponding three-dimensional space or based on preference information of a current user, wherein the search content sequence comprises N pieces of search content, and each piece of search content is ranked based on information popularity;
generating each piece of display position information for each piece of search content based on a sequence ranking n (1≤n≤N, and n is an integer) of each piece of search content in the search content sequence, wherein display position information in each piece of display position information comprises a horizontal coordinate X, a vertical coordinate Y, and a depth coordinate Z, the horizontal coordinate X represents a horizontal ranking relative to a camera position, the vertical coordinate Y represents a vertical ranking relative to a horizontal coordinate line X, and the depth coordinate Z represents a depth ranking relative to the camera position;
displaying each search content card corresponding to each piece of search content in the three-dimensional space based on the horizontal coordinate X, the vertical coordinate Y, and the depth coordinate Z that correspond to each piece of search content, wherein the search content card displays first-page content information of the corresponding search content, the search content card is displayed based on a ranking in the search content sequence at a three-dimensional display layer that corresponds to the depth coordinate corresponding to the search content, each piece of search content corresponding to each search content card that corresponds to a field of view area is arranged at a front end of the search content sequence at each three-dimensional display layer in the three-dimensional space, display brightness of a three-dimensional display layer relatively far away from the camera position is less than display brightness of a three-dimensional display layer relatively close to the camera position, and all search content cards have a same horizontal width; and
displaying each updated search content card at each three-dimensional display layer in response to detecting a slide to refresh operation for each three-dimensional display layer in the three-dimensional space, wherein
the three-dimensional space is displayed in an AR device whose FOV range is 40 degrees to 60 degrees, a value range of N is 11 to 55, a value range of the horizontal coordinate X is -5 to 5, and a value range of the depth coordinate Z is 1 to 4.

2. The method according to claim 1, wherein a value range of Z is 1 to 3; and
Z=3 when n is divisible by 3; or
Z=2 when n is indivisible by 3 but is divisible by 2; or
Z=1 when n is indivisible by 3 or 2.

3. The method according to claim 1, wherein the method further comprises:
in response to detecting a slide to back operation for each three-dimensional display layer in the three-dimensional space, and each updated search content card being currently displayed at each three-dimensional display layer, displaying, at each three-dimensional display layer, each search content card displayed at the three-dimensional display layer at a previous time.

4. The method according to claim 1, wherein the method further comprises:
moving a target search content card to a target layer in response to detecting a hover operation performed on a search content card displayed at any three-dimensional display layer, wherein the target search content card is a search content card corresponding to the hover operation, a distance between the target layer and the camera position is less than a distance between each three-dimensional display layer and the camera position, and a card size of the target search content card displayed at the target layer is larger than a card size of the target search content card displayed at the any three-dimensional display layer.

5. The method according to claim 4, wherein the moving a target search content card to a target layer comprises:
determining the card size of the target search content card at the any three-dimensional display layer;
determining a scale-up multiple of the target search content card based on the determined card size;
generating the card size of the target search content card at the target layer as a target card size based on the scale-up multiple and the determined card size; and
moving the target search content card to the target layer, and scaling up the target search content card to the target card size.

6. The method according to claim 4, wherein the moving a target search content card to a target layer comprises:
moving the target search content card to the target layer in response to determining that the any three-dimensional display layer is not a three-dimensional display layer closest to the camera position; and for each three-dimensional display layer before the any three-dimensional display layer, moving each search content card adjacent to the target search content card at the three-dimensional display layer to either side in response to determining that the target search content card is moved to the three-dimensional display layer, and resetting each moved search content card at the three-dimensional display layer in response to determining that the target search content card is moved out of the three-dimensional display layer.

7. The method according to claim 4, wherein the method further comprises:
in response to detecting a selection operation performed on the target search content card at the target layer, scaling up and displaying the target search content card at a central position of the target layer, and hiding each search content card displayed at each three-dimensional display layer, wherein a refresh control and a return control are further displayed at the target layer;
obtaining a related content sequence that corresponds to search content corresponding to the target search content card; and
displaying each related content card corresponding to the related content sequence around the target search content card in the three-dimensional space.

8. The method according to claim 7, wherein the scaling up and displaying the target search content card at a central position of the target layer comprises:
scaling up the target search content card by a target multiple corresponding to the field of view area in response to determining that a content type corresponding to the target search content card is a picture and text type or a text type;
displaying the scaled-up target search content card at the central position of the target layer; and
sliding and displaying display content corresponding to the content slide operation on the target search content card in response to detecting a content slide operation performed on the target search content card.

9. The method according to claim 1, wherein each search content card edge part is further displayed on either side of the field of view area, and display brightness of each search content card edge part is less than display brightness of a three-dimensional display layer corresponding to the search content card edge part; and
the method further comprises:
in response to detecting a field of view moving operation in the three-dimensional space, displaying each search content card in an updated field of view area corresponding to the field of view moving operation, and for each search content card edge part on a side corresponding to the field of view moving operation in the field of view area, updating display brightness of the search content card edge part to display brightness of a three-dimensional display layer corresponding to the search content card edge part.

10. The method according to any one of claims 1 to 9, wherein any three-dimensional display layer in the three-dimensional space corresponds to a pre-divided card display column sequence, the card display column sequence is arranged in ascending order in a counter-clockwise direction from the central position, and a number of search content cards that are displayable in each card display column is less than a preset number; and
the generating each piece of display position information of each piece of search content comprises:
determining a card size corresponding to the search content based on a content type corresponding to each piece of search content in the search content sequence, wherein all determined card sizes comprise a same card width;
determining a first card display column in the card display column sequence as a current card display column;
determining a first piece of search content in the search content sequence as current search content; and
performing the following loop steps based on the current card display column and the current search content:
in response to determining that a remaining display size of the current card display column is larger than a card size corresponding to the current search content, and a number of pieces of to-be-displayed search content corresponding to the current card display column is less than a difference between the preset number and a preset value, determining a horizontal coordinate and a vertical coordinate that correspond to the current search content based on an initial vertical coordinate corresponding to the current card display column or a vertical coordinate corresponding to a last piece of to-be-displayed search content, using a next piece of search content of the current search content as current search content, and performing the loop step again; and
in response to determining that the remaining display size of the current card display column is smaller than the card size corresponding to the current search content, or the number of pieces of to-be-displayed search content corresponding to the current card display column is larger than the difference between the preset number and the preset value, using a next card display column of the current card display column as a current card display column, and performing the loop step again.

11. The method according to claim 10, wherein the generating each piece of display position information of each piece of search content further comprises:
performing the following steps for each piece of search content in the search content sequence:
determining a first value as a depth coordinate corresponding to the search content in response to determining that a sequence number of the search content meets a first preset exact division condition corresponding to the first value;
determining a second value as the depth coordinate corresponding to the search content in response to determining that the sequence number of the search content meets a second preset exact division condition corresponding to the second value;
determining a third value as the depth coordinate corresponding to the search content in response to determining that the sequence number of the search content does not meet the first preset exact division condition or the exact second preset exact division condition, wherein the second value is greater than the first value, and the first value is greater than the third value; and
determining a horizontal coordinate, a vertical coordinate, and the depth coordinate that correspond to the search content as display position information corresponding to the search content.

12. An AR device, comprising:
one or more processors;
a display screen, configured to perform imaging in front of an eye of a user; and
a storage apparatus, wherein the storage apparatus stores one or more programs, wherein
when the one or more programs are executed by the one or more processors, the one or more processors are enabled to implement the method according to any one of claims 1 to 11.

13. A computer-readable medium, on which a computer program is stored, wherein the computer program is executed by a processor to implement the method according to any one of claims 1 and 11.
